Europäisches Patentamt

European Patent Office

Office européen des brevets

(11) Veröffentlichungsnummer: **0 245 738 B1**

(12) **EUROPÄISCHE PATENTSCHRIFT**

(45) Veröffentlichungstag der Patentschrift:
09.08.89

(51) Int. Cl.⁴: **F01N 3/28, B01J 35/04**

(21) Anmeldenummer: **87106406.9**

(22) Anmeldetag: **04.05.87**

(54) Metallischer Wabenkörper, insbesondere Katalysator-Trägerkörper, mit Tragwand und Verfahren zu seiner Herstellung.

(30) Priorität: **12.05.86 DE 3615902**
**11.08.86 DE 3627224**

(43) Veröffentlichungstag der Anmeldung:
**19.11.87 Patentblatt 87/47**

(45) Bekanntmachung des Hinweises auf die Patenterteilung:
**09.08.89 Patentblatt 89/32**

(84) Benannte Vertragsstaaten:
**AT BE CH DE ES FR GB GR IT LI LU NL SE**

(56) Entgegenhaltungen:
**EP-A- 0 121 174**
**DE-A- 2 727 967**
**FR-A- 2 214 818**
**US-A- 3 597 165**

(73) Patentinhaber: **INTERATOM Gesellschaft mit
beschränkter Haftung. Friedrich-Ebert-Strasse.
D-5060 Bergisch-Gladbach 1(DE)**

(72) Erfinder: **Swars, Helmut, Dipl.-Ing., Riedweg 11,
D-5060 Bergisch Gladbach 1(DE)**

(74) Vertreter: **Mehl, Ernst, Dipl.-Ing. et al, Postfach 22 13 17,
D-8000 München 22(DE)**

ACTORUM AG

**Beschreibung**

Die vorliegende Erfindung betrifft einen metallischen Wabenkörper, insbesondere Katalysator-Trägerkörper, nach dem Oberbegriff des Anspruchs 1 sowie Verfahren zu seiner Herstellung.

Es ist bekannt, wabenförmige Körper durch abwechselndes Anordnen von Lagen strukturierter Bleche herzustellen. Vorzugsweise bestehen diese Lagen aus einem glatten Blech im Wechsel mit einem gewellten Blech. Die Form der Wellung, z. B. sinusförmig, trapezförmig, omegaförmig oder zickzackförmig, spielt für die vorliegende Erfindung keine entscheidende Rolle. Auch können beide Blechlagen in irgendeiner Form strukturiert sein. Entsprechende Wabenkörper und Verfahren zu ihrer Herstellung werden beispielsweise in der EP-B-0 049 489, der EP-B-0 056 435, der DE-A-29 02 779, der EP-A-0 186 801 oder der DE-A-28 56 030 beschrieben.

Aus verschiedenen Schriften, beispielsweise der EP-A-0 121 174, der EP-A-0 121 175 oder der DE-A-33 12 944, ist weiterhin bekannt, daß es beim Befestigen solcher Wabenkörper in einem Mantelrohr aufgrund der thermischen Wechselbelastungen und verschiedener anderer Effekte zu Schwierigkeiten kommen kann.

Verschiedene zur Beherrschung dieser Schwierigkeiten vorgeschlagene Lösungen betreffen einen elastischeren Aufbau des Wabenkörpers und verschiedene besondere Verbindungstechniken. Auf diese Weise lassen sich zwar die Belastungen in gewissen Grenzen beherrschen, sie werden jedoch nicht beseitigt.

Aufgabe der vorliegenden Erfindung ist die Schaffung eines metallischen Wabenkörpers, insbesondere Katalysator-Trägerkörpers, der gattungsgemäßen Art, bei welcher thermische Wechselbelastungen nicht zu besonderen Belastungen der fügetechnischen Verbindungsstellen führen, sowie Verfahren zur Herstellung solcher Wabenkörper.

Zur Lösung dieser Aufgabe wird ein Wabenkörper mit den kennzeichnenden Merkmalen des Anspruchs 1 vorgeschlagen. Vorteilhafte Ausgestaltungen eines solchen Wabenkörpers sind in den Unteransprüchen 2 bis 18 angegeben und werden anhand der Zeichnung näher erläutert. Entsprechende Herstellungsverfahren sind in den Ansprüchen 19 bis 23 enthalten.

Der entscheidende Gedanke bei der vorliegenden Erfindung liegt darin, daß die einzelnen Lagen der Wabenstruktur nicht mehr unbedingt selbsttragend miteinander verbunden sein müssen. Vielmehr übernehmen mindestens eine Tragwand und/oder Abschnitte des Mantels diese Funktion und die einzelnen Lagen werden durch ihre Befestigung an Tragwand und/oder Mantel einzeln gehalten. Dadurch, daß die einzelnen Lagen gleichzeitig gebogen sein sollen, ist diese Anordnung nicht mehr zu vergleichen mit vorgeschlagenen, aus einzelnen ebenen Lagen geschichteten Körpern, bei welchen teilweise die Lagen auch an beiden Enden an einem Mantelrohr befestigt waren. Glatte Lagen geraten auch dabei unter Zugspannung und die Herstellung runder oder ovaler Querschnitte erfordert unterschiedliche Längen der einzelnen Blechlagen und unterschiedliche Befestigungswinkel am Mantelrohr, wodurch zusätzliche Schwierigkeiten entstehen. Demgegenüber ist bei den erfindungsgemäß gebogenen Blechlagen auch für glatte Blechlagen keine unzulässige Zugspannung mehr zu erwarten und die Anordnung der Tragwände ermöglicht zusätzlich für viele denkbare Formen der Querschnittsfläche etwa rechte Winkel zwischen den einzelnen Lagenenden und der Tragwand bzw. dem Mantel. Auch freie Lagenenden, die schwingen können, werden vermieden.

Wie anhand der Zeichnung näher erläutert wird, ist es von der Bauform und Größe des Wabenkörpers abhängig, ob eine Tragwand oder mehrere Tragwände vorgesehen werden müssen, und wie diese mit Abschnitten des Mantels eine tragende Struktur bilden können.

Insbesondere ermöglicht die Verwendung von Tragwänden im Inneren eines Katalysator-Trägerkörpers gemäß dem Anspruch 6 die Aufteilung des Katalysator-Trägerkörpers in zwei oder mehr unabhängige Segmente, was bei Kraftfahrzeugen, deren Auspuffanlagen mehrsträngig angelegt sind, von großem Vorteil sein kann. Hier können die einzelnen unabhängigen Segmente durch geeignete Rohrführung den einzelnen Auspuffsträngen zugeordnet werden. Ansonsten stören die Tragwände im Inneren auch bei einsträngigen Auspuffanlagen den Abgasstrom kaum, da ihre geringe Querschnittsfläche praktisch nicht ins Gewicht fällt.

Eine solche Tragwand im Inneren eines Katalysator-Trägerkörpers kann im übrigen gemäß Anspruch 7 einen abgeflachten Querschnitt besonders gut gegen Verformung z. B. durch Überdruck stabilisieren. Eine solche Tragwand als Verbindung zwischen gegenüberliegenden Seiten eines Mantels bei einem abgeflachten Katalysator-Trägerkörper verhindert das Ausbeulen dieser Seiten bei erhöhtem Innendruck, so daß diese Kräfte nicht mehr durch ein besonders dickes Mantelrohr aufgefangen werden müssen.

Ein weiterer, besonders wichtiger Vorteil der erfindungsgemäßen Wabenkörper mit Tragwänden besteht ferner darin, daß nunmehr nicht unbedingt fügetechnische Verbindungen zwischen den einzelnen Blechlagen vorgesehen werden müssen. Dies hat zumindest für Lötverbindungen den Vorteil, daß nicht mehr der ganze Wabenkörper in einem Lötofen aufgeheizt werden muß, sondern daß nur gezielt die Tragwände und deren Umgebung für eine Lötung aufgeheizt werden müssen. Da das Aufheizen eines gesamten Wabenkörpers äußerst langwierig ist, die Aufheizung einer Tragwand jedoch sehr schnell bewerkstelligt werden kann, ergeben sich hierdurch Zeit- und Energieeinsparungen. Im allgemeinen ist eine Aufheizung der Tragwände ohne Ofen durch Kontakt mit einer erhitzten Fläche, durch Wärmestrahlung, durch elektrischen, beispielsweise induzierten Strom oder durch Laser möglich. Da außerdem die Tragwand vor dem Einsetzen bereits belotet sein kann, bieten sich weitere erhebliche Vorteile.

Darüber hinaus brauchen die Verbindungen zwischen den Lagen und der Tragwand jedoch nicht unbedingt gelötet zu sein, da sie praktisch nicht auf Zug belastet sind. Es können daher einerseits die etwas weniger belastbaren Schweißverbindungen, beispielsweise durch Laserschweißen verwendet werden. Andererseits ist es sogar möglich, rein mechanische Formschlußverbindungen herzustellen. Kombinationen aller Verbindungsarten sind möglich. Formschlußverbindungen lassen sich durch Nuten oder Vorsprünge in den Tragwänden und entsprechende Gegenformen in den einzelnen Lagen verwirklichen. Da Katalysator-Trägerkörper vom Abgas parallel zu den einzelnen Lagen durchströmt werden, wirken hauptsächlich Kräfte in dieser Richtung. Durch Vorsprünge bzw. Nuten, die etwa senkrecht zu der Strömungsrichtung verlaufen, kann ein Verschieben der einzelnen Lagen schon sicher verhindert werden. Da die Lagen durch die dichte Packung in ihrem Gehäuse auch nicht in andere Richtungen ausweichen können, reicht eine rein mechanische Formschlußverbindung schon zur sicheren Halterung der Lagen aus. Lediglich zur Beherrschung von eventuell im Einzelfall auftretenden Schwingungen können weitere Maßnahmen bei der Verbindungstechnik erforderlich sein. Ein teleskopartiges Verschieben der Lagen, wie es bei spiralförmig gewickelten Katalysator-Trägerkörpern nach Überbeanspruchung vorkommen kann, ist bei erfindungsgemäß befestigten Strukturen nicht möglich.

Erfindungsgemäße Wabenkörper können prinzipiell auf ganz verschiedenen Wegen hergestellt werden. Besonders wirtschaftlich sind jedoch Herstellungsverfahren gemäß den Ansprüchen 19 bis 23, welche als Ausgangsprodukt einen in an sich bekannter Weise spiralig gewickelten Rohling verwenden. Andere Herstellungsverfahren mit Zuschneiden der einzelnen Blechlagen und geeignetem Verformen sind jedoch möglich.

Gemäß Anspruch 19 entsteht ein erfindungsgemäßer Wabenkörper aus einem spiralig gewickelten, wabenförmigen Rohling, wie er in den zum Stand der Technik genannten Schriften beschrieben ist. Ein solcher Rohling läßt sich mit einem kreisförmigen Querschnitt herstellen, kann aber auch durch Aufwickeln auf einen irgendwie geformten, vorzugsweise zylindrischen Dorn und anschließendes Verformen mit anderen Querschnitten, insbesondere abgeflachten Querschnitten hergestellt werden. Ein so hergestellter Wabenkörper dient gemäß dem Stand der Technik nach weiteren fügetechnischen Behandlungen z. B. als fertiger Katalysator-Trägerkörper. Gemäß der vorliegenden Erfindung wird dieser Rohling jedoch weiter bearbeitet, nämlich aufgeschlitzt oder in Segmente zerteilt und mit Tragwänden versehen. Eine Bearbeitung der Trennflächen ist evtl. je nach dem verwendeten Schneidsystem als Zwischenschritt erforderlich und kann zusätzlich dazu dienen, eine geringe Maßtoleranz oder eine für einen Formschluß nötige Form zu erreichen.

Weitere Ausgestaltungen des Verfahrens, insbesondere für besonders geformte Rohlinge sind in den Ansprüchen 20 bis 23 beschrieben. Die Unterteilung eines Rohlings in mehrere Segmente eröffnet insbesondere die Möglichkeit, diese Segmente in einem späteren Arbeitsschritt zu der ursprünglichen Form oder aber, evtl. durch Hinzunehmen von Segmenten anderer Rohlinge, zu einer ganz anderen Form wieder zusammenzusetzen. Der auf einfache Weise herstellbare Formenschatz z. B. für Katalysator-Trägerkörper wird dadurch erheblich erweitert. Außerdem können Wabenkörper mit unterschiedlichen Zellengrößen in einzelnen Segmenten hergestellt werden. Die beispielhaft angegebenen Verfahren zeigen nur den prinzipiellen Weg zur Herstellung erfindungsgemäßer Katalysator-Trägerkörper. Erhebliche Variationen der Herstellverfahren liegen im Bereich des fachmännischen Könnens. Insbesondere die Wahl der vorteilhaftesten Form und Anzahl der Tragwände, die fügetechnische Verbindungsmethode zwischen Tragwänden und Blechlagen und zwischen Tragwänden und Mantelteilen hängt von den verwendeten Materialien, den gewünschten Formen und den Vorgaben des zugehörigen Abgassystemes ab.

Ausführungsbeispiele der Erfindung für Kfz-Katalysatoren in schematischer Form sind in der Zeichnung dargestellt, und zwar zeigen

Figur 1 einen Katalysator-Trägerkörper mit kreisförmigem Querschnitt und einer Tragwand,

Figur 2 einen Katalysator-Trägerkörper mit ebenfalls kreisförmigem Querschnitt aber wegen seiner größeren Querschnittsfläche mit drei Tragwänden,

Figur 3 einen Rohling zur Herstellung erfindungsgemäßer Katalysator-Trägerkörper mit möglichen Schnittlinien,

Figur 4 einen aus dem Rohling entsprechend Figur 3 hergestellten erfindungsgemäßen Katalysator-Trägerkörper in schematisch perspektivischer Darstellung,

Figur 5 einen Längsschnitt durch eine Schweißnaht in der Tragwand aus Figur 4,

Figur 6 einen aus zwei Segmenten zusammengesetzten erfindungsgemäßen Katalysator-Trägerkörper,

Figur 7 schematisch einen aus drei Segmenten bestehenden Katalysator-Trägerkörper mit kreisförmigem Querschnitt,

Figur 8 eine mit Vorsprüngen für Formschlußverbindungen versehene Tragwand und

Figuren 9 - 21 schematische Beispiele für den gemäß der Erfindung herstellbaren Formenschatz.

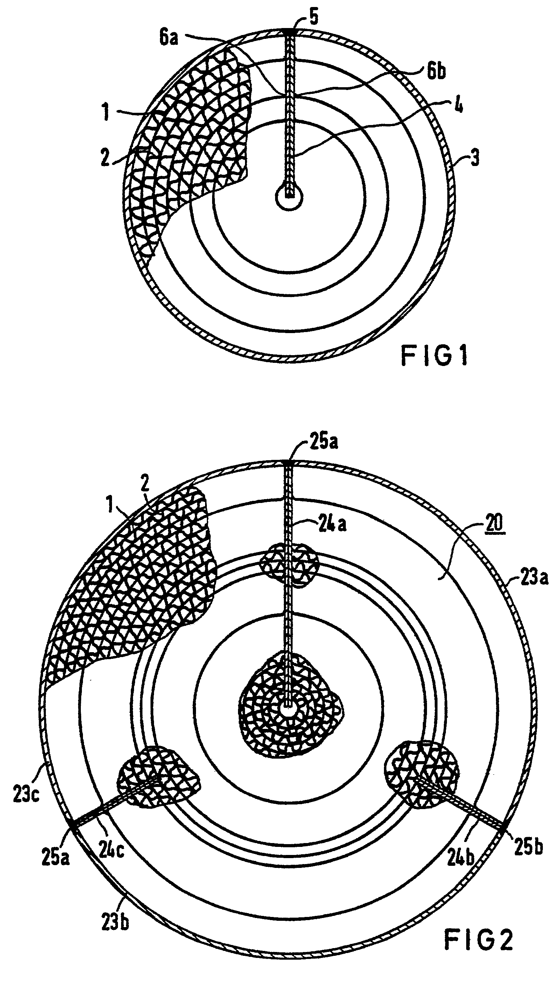

Figur 1 zeigt einen Querschnitt durch einen aus abwechselnden Lagen glatter 1 und gewellter 2 Bleche spiralig gewickelten Wabenkörper in einem Mantelrohr 3. Dieser Wabenkörper ist entlang einer in radialer Richtung verlaufenden Ebene von einer Tragwand 4 durchsetzt. Diese Tragwand ist an einer Verbindungsstelle 5 fest mit dem Mantelrohr 3 verbunden, vorzugsweise stumpf verschweißt. An der Tragwand 4 sind auf beiden Seiten jeweils die angrenzenden Blechlagen an Verbindungsstellen 6a, 6b befestigt. Weitere Verbindungsstellen der Blechlagen 1, 2 untereinander oder mit dem Mantelrohr 3 braucht der so aufgebaute Katalysator-Trägerkörper nicht unbedingt aufzuweisen. Verbindungen der Bleche untereinander können jedoch vorteilhaft sein. Die Tragwand 4 kann je nach der Herstellungsmethode, mit der sie in den gewickelten Körper eingebracht wurde, doppelwandig ausgeführt sein, wobei die beiden aneinander liegenden Hälften an den Stirnseiten miteinander verschweißt oder verlötet sein können.

Die Tragwand 4 in Fig. 1 kann auch so bemessen sein, daß sie nur über einen kleinen Teil der axialen Länge des Wabenkörpers reicht. Durch Schlitzen eines bekannten spiralig gewickelten Körpers von einer Stirnseite aus und Einschieben einer Tragwand kann eine solche Form hergestellt werden. Vorzugsweise stellt dann die Tragwand 4 die einzige Verbindung 5 zwischen den Blechen 1, 2 und dem Mantel 3 her, so daß die Bleche in ihrer Dehnung unabhängig von der Dehnung des Mantels sind.

Figur 2 zeigt einen Querschnitt durch einen ebenfalls aus spiralförmig gewickelten Blechen hergestellten Katalysator-Trägerkörper, der jedoch wegen seiner größeren Querschnittsfläche aus Stabilisierungsgründen drei Tragwände 24a, 24b, 24c aufweist. Eine Tragwand 24a verläuft in einer radialen Ebene bis zum Zentrum des Trägerkörpers, die beiden anderen 24b, 24c liegen ebenfalls in radialen Ebenen, jedoch nur im Bereich der äußeren Blechlagen des Katalysator-Trägerkörpers. Durch diese Anordnung der Tragwände werden zu lange freie Stücke der Blechlagen 1, 2 vermieden und die Schwingungsneigung des Körpers verringert. Alle drei Tragwände 24a, 24b, 24c sind mit dem aus drei Teilstücken 23a, 23b, 23c bestehenden Mantel des Katalysator-Trägerkörpers 20 fügetechnisch verbunden 25a, 25b, 25c, vorzugsweise stumpf verschweißt.

Die beiden Ausführungsbeispiele gemäß den Figuren 1 und 2 besitzen einen weiteren, bisher noch nicht angeführten Vorteil, sie können nämlich prinzipiell vor Anbringung des Mantels mit katalytisch aktivem Material beschichtet werden, sobald die Verbindungen zwischen Blechlagen 1, 2 und Tragwand 4 bzw. 24a hergestellt sind. Da die Blechlagen 1, 2 nicht mehr mit dem Mantelrohr fügetechnisch verbunden werden müssen, können sie auch vor Anbringen des Mantels beschichtet sein, da nur noch die Tragwände mit dem Mantel verschweißt oder anderweitig verbunden werden. Dieser Vorteil ergibt sich teilweise auch bei den weiteren Ausführungsbeispielen, je nach den vorgesehenen Verfahrensabläufen.

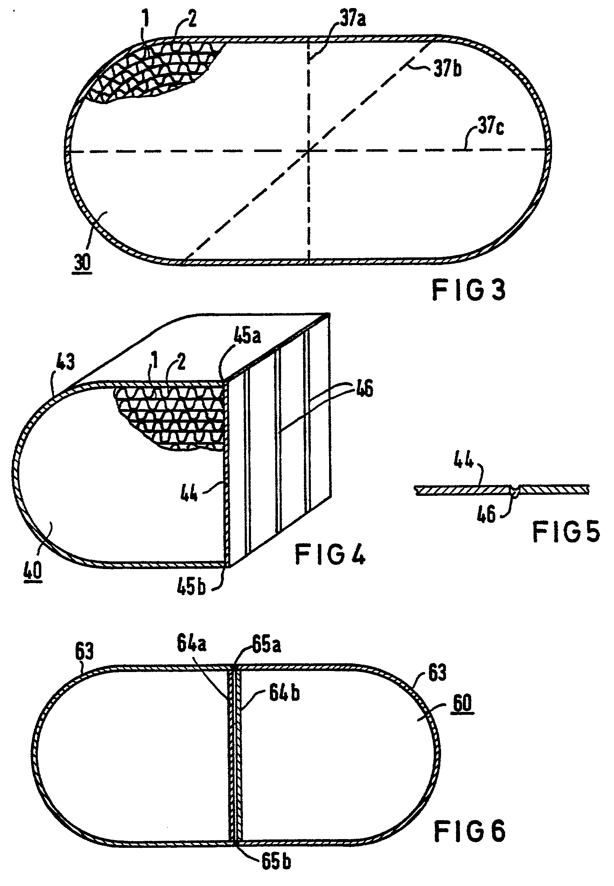

Figur 3 zeigt als Beispiel für die Möglichkeiten, die die vorliegende Erfindung bietet, einen in an sich bekannter Weise hergestellten Rohling mit abgeflachtem Querschnitt. Ein solcher Rohling kann beispielsweise auf einem flachen Dorn gewickelt werden oder er wird auf einem runden Dorn gewickelt und später flachgedrückt. Ein solcher Rohling kann auch entsprechend den Figuren 1 oder 2 mit Tragwänden versehen werden; er kann jedoch auch entlang einer der beispielhaft angegebenen Schnittlinien 37a, 37b, 37c in zwei Segmente zerschnitten werden. Entlang der Trennflächen, die ggf. noch weiter bearbeitet werden können, werden Tragwände angebracht und befestigt.

Auf diese Weise kann beispielsweise gemäß Figur 4 ein Segment 40 entstehen, bei welchem die Blechlagen 1, 2 U-förmig an einer Tragwand 44 befestigt sind. Das ganze Segment besitzt einen Mantel, der aus einer Halbschale 43 und der Tragwand 44 gebildet wird. Halbschale 43 und Tragwand 44 sind an den Berührungslinien 45a, 45b fügetechnisch miteinander verbunden, vorzugsweise verschweißt. Die Verbindung der Lagen 1, 2 mit der Tragwand 44 kann vorzugsweise durch Laserschweißen von außen erfolgen. Dabei wird ein Laserstrahl entlang der vorgesehenen Schweißlinien 46 über die Tragwand 44 bewegt und schmilzt diese bis zur Innenseite auf, wodurch Verbindungen zu den Lagen 1, 2 entstehen.

Wie in Figur 5 gezeigt, kann bei Durchführung dieses Schweißvorganges in waagerechter Lage der Tragwand 44 die so entstehende Schweißnaht 46 einsinken, so daß ein sogenannter Wurzeldurchhang entsteht. Dieser bewirkt neben der Schweißverbindung zusätzlich eine formschlüssige Verbindung mit den Blechlagen 1, 2, so daß die Blechlagen 1, 2 durch den Abgasstrom nicht aus dem Mantel 43, 44 herausgedrückt werden können. Diese formschlüssige Verbindung, die sich auch durch andere Methoden herstellen läßt, beseitigt die letzte vorher noch bestehende Bewegungsfreiheit der Blechlagen 1, 2 und führt somit zu einem sehr stabilen Katalysator-Trägerkörper, der jedoch keine großen mechanischen Wechselbelastungen ausgesetzte Verbindungen aufweist.

In Figur 6 ist schematisch ein Katalysator-Träger 60 dargestellt, der aus Segmenten entsprechend Figur 4 zusammengesetzt ist. Die Tragwände 64a, 64b liegen nunmehr als Doppelwand wiederum im Inneren des entstehenden Gesamt-Katalysator-Trägerkörpers 60 und teilen diesen in zwei unabhängige Segmente, was insbesondere für zweistrangige Auspuffanlagen vorteilhaft sein kann. Die als Mantel dienenden zwei Halbschalen 63 können an ihren Berührungslinien 65a, 65b fügetechnisch verbunden werden, so daß nach außen wieder ein dem Rohling aus Figur 3 entsprechender Körper entsteht. Dieser weist jedoch nunmehr im Inneren eine doppelwandige Tragwand 64a, 64b auf, welche den Körper erheblich stabilisiert. Ein Aufblähen der abgeflachten Seiten durch großen Innendruck ist nicht mehr zu befürchten.

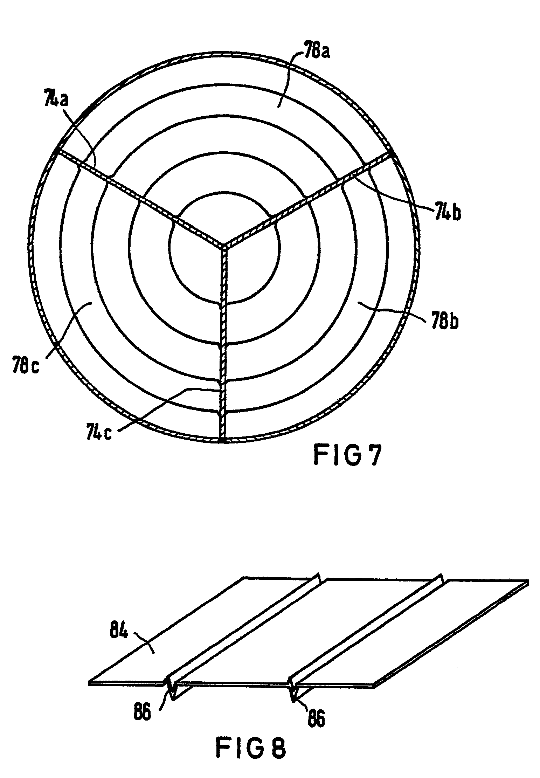

Der Vollständigkeit halber zeigt Figur 7 schematisch eine weitere Möglichkeit der Anordnung von Tragwänden in einem Katalysator-Trägerkörper. Ein solcher Körper kann durch mehrere Tragwände 74a, 74b, 74c, welche sich beispielsweise im Zentrum treffen, in mehrere unabhängige Segmente 78a, 78b, 78c unterteilt sein.

In Figur 8 ist schematisch eine für formschlüssige Verbindungen vorbereitete Tragwand 84 dargestellt, welche Sicken 86 oder andersartige Vorsprünge nach einer oder beiden Seiten aufweist. Die für Katalysator-Trägerkörper im allgemeinen verwendeten sehr dünnen Blechlagen nehmen die entsprechende Gegenform durch bloßes Andrücken an die Tragwand 84 an und brauchen vorher nicht bearbeitet zu werden. Die geringe Querschnittsverminderung durch eine formschlüssige Verbindung fällt praktisch nicht ins Gewicht.

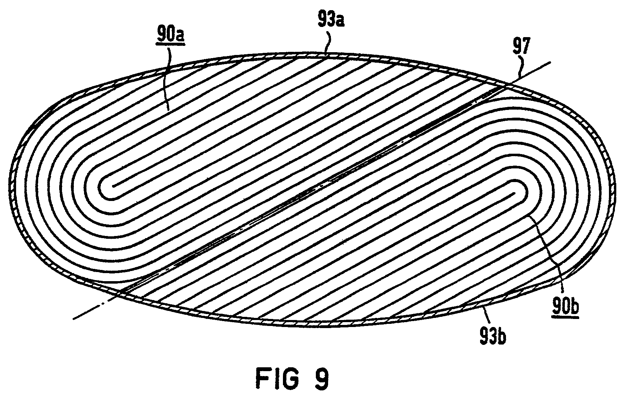

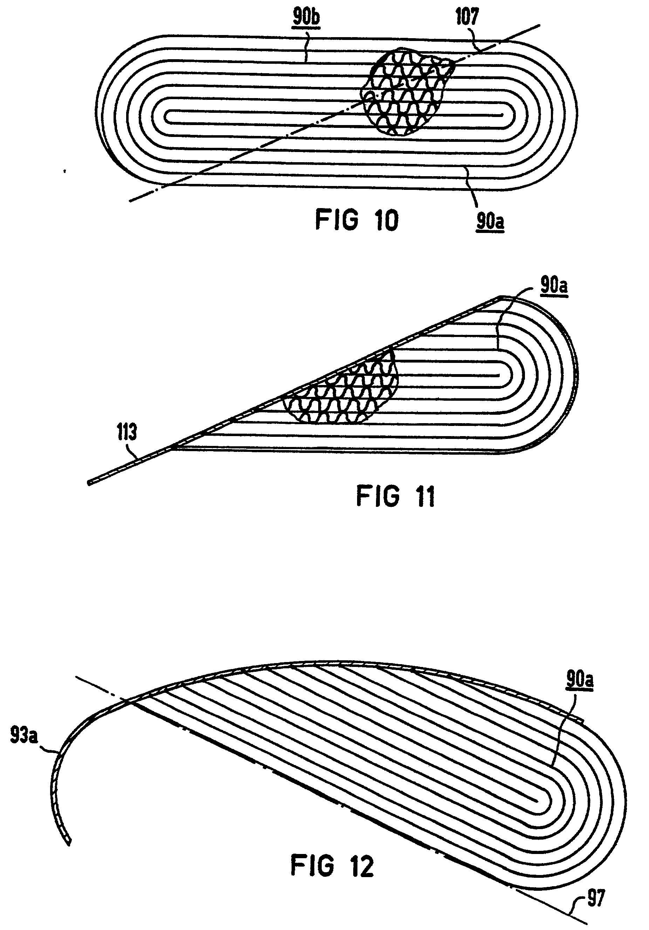

Die bisherigen Beispiele zeigen alle gerade Tragwände bzw. tragende Strukturen. Wie die Fig. 9 bis 12 deutlich machen, ist dies nicht zwingend erforderlich. Bei der Herstellung von Körpern 90a, 90b mit gekrümmten Tragstrukturen 93a, 93b aus zerteilten Rohlingen, ist es jedoch im allgemeinen einfacher, die Rohlinge (Fig. 10) zunächst geradlinig 107 zu teilen, die Lagen an geraden Tragwänden 113 zu befestigen (Fig. 11) und diese dann erst zu biegen (Fig. 12) und daraus neue Körper mit Dehnfuge 97 zusammenzusetzen (Fig. 9).

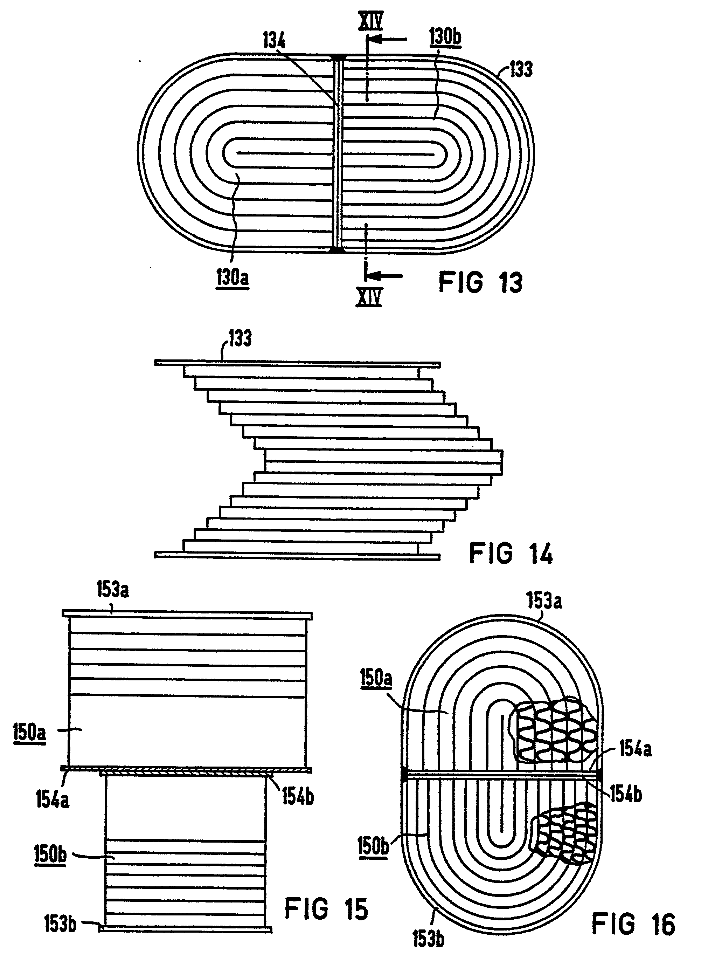

Wie Fig. 13 u. 14 zeigen, ist es ferner auch bei einigen erfindungsgemäßen Wabenkörpern 130a, 130b möglich, teleskopartig vorstehende Stirnseiten zu erstellen. Gegenüber der entsprechenden Form bei spiralig gewickelten Körpern ergibt sich hier tatsächlich ein teleskopartiges Verschieben der einzelnen Lagen, wobei die Kanäle ihre axiale Richtung nicht verlieren. Dabei zeigt Figur 13 eine Stirnansicht eines teleskopierten Wabenkörpers 130a, 130b mit einer inneren Tragwand 134 und einem Mantel 133, wobei zusätzlich angedeutet ist, daß die gasdurchlässigen Kanäle in den beiden Segmenten unterschiedliche Querschnitte haben können. Figur 14 zeigt einen Längsschnitt durch Figur 13 entlang der Linie XIV-XIV, um die teleskopierte Form zu verdeutlichen. Die Tragwand 134 hat vorzugsweise eine entsprechende Pfeilform. Durch die Unabhängigkeit der einzelnen Lagen voneinander können allerdings auch beliebige andere Stirnseitenprofile durch entsprechend gestuftes Teleskopieren hergestellt werden.

Die Figuren 15 und 16 zeigen einen Längs- bzw. Querschnitt durch eine andere Wabenkörperform. Neben einer unterschiedlichen Größe der Kanalquerschnitte in den beiden Segmenten 150a, 150b kann auch deren axiale Länge unterschiedlich sein, um eine bessere Anpassung an vorhandene Räumlichkeiten zu ermöglichen. Ein solcher Körper wird beispielsweise durch Zusammensetzen von Segmenten zweier unterschiedlich langer abgeflachter Wabenkörper hergestellt. Sein Mantel besteht aus zwei Halbschalen 153a, 153b, die innenliegende Tragwand 154a, 154b ist vorzugsweise doppellagig ausgeführt.

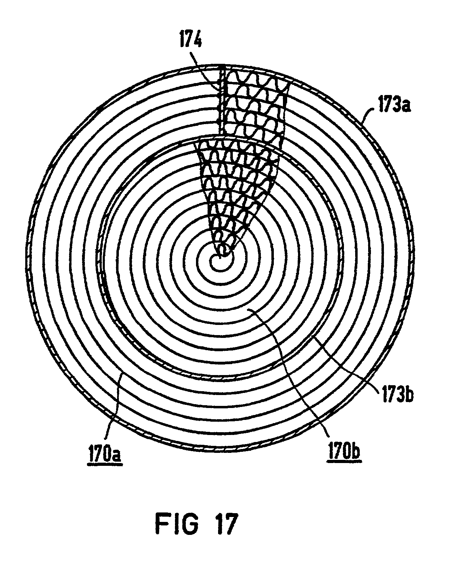

Figur 17 zeigt ein weiteres Ausführungsbeispiel der vorliegenden Erfindung. Der dortige Körper besteht in seinem Inneren 170b aus einem herkömmlichen, spiralig gewickelten Bautyp mit einem Mantel 173b. Zur Beherrschung der mit größer werdendem Durchmesser immer stärker auftretenden Dehnungsprobleme ist der innere Körper 170b mittels einer Tragwand 174 an dem äußeren Mantel 173a befestigt. Ferner ist der Bereich 170a zwischen den beiden Mänteln 173a, 173b ebenfalls mit strukturierten Blechen ausgefüllt, welche mit ihren Enden an der Tragwand 174 befestigt sind.

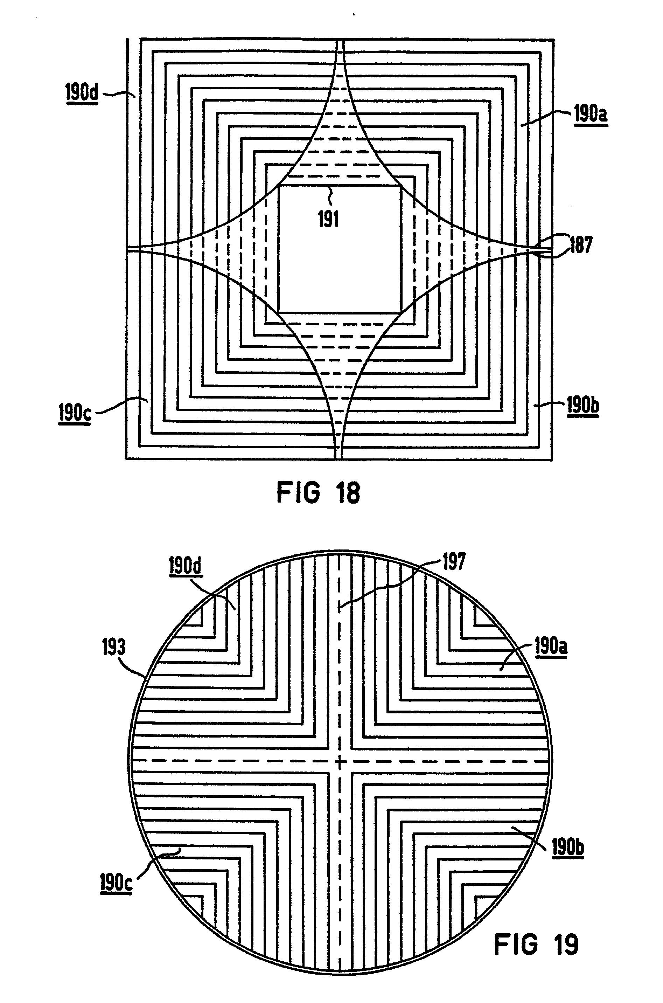

Die Figuren 18 und 19 zeigen schematisch die prinzipiellen weiteren Möglichkeiten der Erfindung. Ein spiralig auf einen quadratischen Kern 191 aufgewickelter Wabenkörper 190a, 190b, 190c, 190d wird entlang der Linie 187 zerteilt, beispielsweise durch Elektrokorrosion mit einem Draht oder mittels eines Laserstrahls und neu zu dem in Figur 19 dargestellten Körper zusammengesetzt. Dieser Körper weist einen Mantel 193 auf, an welchem die einzelnen Segmente 190a, 190b, 190c, 190d mit den Blechenden jeweils befestigt sind. Eine kreuzförmige Dehnfuge 197 ermöglicht eine Dehnung des ganzen Körpers ohne Zugbelastung der Verbindungsstellen.

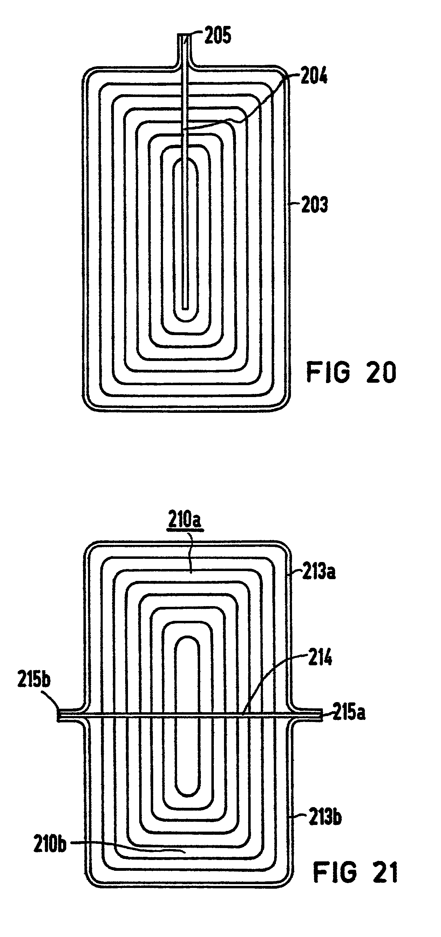

Figur 20 zeigt einen Wabenkörper in einem rechteckigen Mantel 203, bei welchem die strukturierten Bleche an einer Tragwand 204 befestigt sind, wobei die Tragwand mit umgebördelten Enden des Mantels 203 eine Verbindung 205 aufweist.

Figur 21 zeigt einen Wabenkörper der durch eine Tragwand 214 in zwei Segmente 210a, 210b unterteilt ist. Der Mantel besteht ebenfalls aus zwei Hälften 213a, 213b, welche die Tragwand 214 mit ihren umgebördelten Enden umfassen, so daß dort leicht eine fügetechnische Verbindung 215a, 215b herstellbar ist.

Erfindungsgemäße Katalysator-Trägerkörper, die insbesondere aus gewickelten Rohlingen gemäß den beschriebenen Verfahren hergestellt werden können, weisen vielfältige Vorteile gegenüber herkömmlichen Katalysator-Trägerkörpern auf und sind wegen des Prinzips der unbelasteten mechanischen Aufhängung an einer Tragwand in Form und Herstellungsverfahren besonders variabel. Weiterbildungen und Verbesserungen bezüglich Form, Material oder Zusatzausrüstung usw., die sich für herkömmliche metallische Katalysator-Trägerkörper eignen, sind in den meisten Fällen auch bei den erfindungsgemäßen Ausführungsformen anwendbar.

**Patentansprüche**

1. Aus zumindest teilweise strukturierten Blechen (1, 2) geschichteter oder gewickelter, in einem Mantel (3; 23a, 23b, 23c; 43; 63; 93a, 93b; 133; 153a, 153b; 173a; 193; 203; 213a, 213b) untergebrachter, von einem Fluid durchströmbarer Wabenkörper (20; 30; 40; 60; 90a, 90b; 130a, 130b; 150a, 150b; 170a, 170b; 190a, 190b, 190c, 190d; 210a, 210b), insbe-sondere Katalysator-Trägerkörper, dadurch ge-kennzeichnet, daß Teilabschnitte des Mantels und/oder eine oder mehrere im Inneren des Wabenkörpers angeordnete, mit dem Mantel fest verbundene zusätzliche Tragwände (4; 24a, 24b, 24c; 44; 64a, 64b; 74a, 74b, 74c; 134; 154a, 154b; 174; 204; 214) die den Körper tragende Struktur bilden, an der gekrümmt oder geknickt verlaufende bei radialen Dehnungen der tragenden Struktur verbiegbare Bleche (1, 2) beidseitig einzeln oder untereinander zu Verbundkörpern unter Belassung von Dehnfugen (97; 197) zwischen Mantelteilen und Blechen bzw. Blechen oder Verbundkörpern untereinander zusammengefügt befestigt sind.

2. Wabenkörper nach Anspruch 1, dadurch gekennzeichnet, daß die Tragwände sich nur über einen Teil der axialen Länge des Wabenkörpers erstrecken und/oder in radialer Richtung nur über einen Teil des Durchmessers.

3. Wabenkörper nach Anspruch 1 oder 2, dadurch gekennzeichnet, daß der Körper in an sich bekannter Weise aus spiralig gewickelten, zumindest teilweise strukturierten Blechen (1, 2) besteht, die untereinander fügetechnisch zumindest in Teilbereichen zu einem Verbundkörper zusammengefügt sein können, wobei eine Tragwand (4) die einzige fügetechnische Verbindung (5) zwischen Mantel (3) und Körper herstellt.

4. Wabenkörper nach Anspruch 1, 2 oder 3, **dadurch gekennzeichnet**, daß die Bleche (1, 2) im Bereich ihrer Berührungsstellen mit der tragenden Struktur etwa senkrecht zur Durchströmungsrichtung geschlitzt sind.

5. Wabenkörper nach Anspruch 1, 2, 3 oder 4, **dadurch gekennzeichnet**, daß alle Bleche (1, 2) U-förmig, V-förmig oder Kreissegment-förmig verlaufen, ggf. mit unterschiedlich langen Schenkeln, wobei die Enden der Bleche (1, 2) jeweils mit dem Mantel oder einer Tragwand verbunden sind.

6. Wabenkörper nach einem der vorhergehenden Ansprüche, **dadurch gekennzeichnet**, daß die Tragwand (64a, 64b) bzw. die Tragwände (74a, 74b, 74c) den Wabenkörper in zwei oder mehr unabhängige Segmente (78a, 78b, 78c) teilt bzw. teilen.

7. Wabenkörper nach einem der vorhergehenden Ansprüche, **dadurch gekennzeichnet**, daß die Tragwand (44; 64a, 64b) bzw. die Tragwände mit dem Mantel (43; 63) verbunden (45a, 45b; 65a, 65b) sind und ihn gegen Verformung stabilisieren.

8. Wabenkörper nach einem der vorhergehenden Ansprüche, **dadurch gekennzeichnet**, daß die Lagen (1, 2) etwa U-förmig oder V-förmig gebogen sind und ihre beiden Enden jeweils an der gleichen Seite einer Tragwand (44; 64a, 64b; 134; 154a, 154b; 214) oder eines Mantelabschnitts (93a, 93b; 193) befestigt sind.

9. Wabenkörper nach einem der Ansprüche 1 bis 7, **dadurch gekennzeichnet**, daß die Lagen (1, 2) nahezu geschlossen gebogen sind und ihre beiden Enden (6a, 6b) jeweils auf verschiedenen Seiten einer Tragwand (4; 174; 204) befestigt sind.

10. Wabenkörper nach einem der vorhergehenden Ansprüche, **dadurch gekennzeichnet**, daß zumindest einige der Lagen (1, 2) gebogen von einer Tragwand (24a, 24b bzw. 24c) zu einer anderen Tragwand (24b, 24c bzw. 24a) verlaufen und mit ihren Enden an diesen befestigt sind.

11. Wabenkörper nach einem der vorhergehenden Ansprüche, **dadurch gekennzeichnet**, daß die Befestigung zwischen Lagen (1, 2) und Tragwand (4; 24a, 24b, 24c; 44; 64a, 64b) eine Löt- oder Schweißverbindung und/oder eine mechanische Formschlußverbindung (46; 86) ist.

12. Wabenkörper nach Anspruch 11, **dadurch gekennzeichnet**, daß die Tragwand (84) bzw. die Tragwände Vorsprünge (86) und/oder Nuten aufweist bzw. aufweisen, welche formschlüssige Verbindungen mit den Lagen (1, 2) bilden.

13. Wabenkörper nach Anspruch 12, **dadurch gekennzeichnet**, daß die Vorsprünge (86) und/oder Nuten etwa senkrecht zu den anliegenden Lagen (1, 2) verlaufen.

14. Wabenkörper nach Anspruch 11, 12 oder 13, **dadurch gekennzeichnet**, daß jede Tragwand (44) mit mindestens einer Schweißnaht (46), vorzugsweise Laserschweißnaht versehen ist, die die anliegenden Lagen (1, 2) mit einbezieht, wobei die Schweißnaht (46) einen Wurzeldurchhang aufweisen kann, der gleichzeitig noch eine Formschlußverbindung bewirkt.

15. Wabenkörper nach einem der vorhergehenden Ansprüche, **dadurch gekennzeichnet**, daß die Lagen (1, 2) zusätzlich stirnseitig, in Teilbereichen oder insgesamt an ihren Berührungsstellen miteinander verlötet sind.

16. Wabenkörper nach einem der vorhergehenden Ansprüche, **dadurch gekennzeichnet**, daß die im Inneren des Katalysator-Trägerkörpers liegenden Tragwände (64a, 64b) doppellagig ausgeführt sind, wobei sie zumindest an den außen zugänglichen Seiten (65a, 65b) ganz oder teilweise miteinander fügetechnisch verbunden sind, vorzugsweise verschweißt.

17. Wabenkörper nach einem der vorhergehenden Ansprüche, **dadurch gekennzeichnet**, daß der Wabenkörper (60; 90a, 90b; 130a, 130b; 150a, 150b; 210a, 210b) aus zwei oder mehreren Segmenten (90a, 90b; 130a, 130b; 150a, 150b; 210a, 210b) besteht, wobei die Segmente aus einer oder mehreren verschiedenen spiralförmigen, ggf. abgeflachten Wicklung(en) (30) durch Zerteilen (37a, 37b, 37c; 107) herstellbar sind und der Nabenkörper durch andersartiges Zusammensetzen und ggf. Verformen der Segmente hergestellt ist.

18. Wabenkörper nach einem der vorhergehenden Ansprüche, **dadurch gekennzeichnet**, daß alle oder ein Teil der Lagen aller oder eines Teils der Segmente (130a, 130b) teleskopartig gegeneinander verschoben sind, so daß nicht ebene Stirnseiten, vorzugsweise konische, vorhanden sind.

19. Verfahren zur Herstellung eines Wabenkörpers, insbesondere Katalysator-Trägerkörpers, nach Anspruch 1, gekennzeichnet durch folgende Merkmale:

a) Es wird in an sich bekannter Weise ein spiralförmig gewickelter, wabenförmiger Rohling aus Lagen zumindest teilweise strukturierter Bleche hergestellt, der einen kreisförmigen oder abgeflachten Querschnitt aufweist.

b) Der Rohling wird mit einer Säge oder einem anderen Schneidgerät oder dergleichen aufgeschlitzt oder in Segmente zerteilt.

c) Falls erforderlich werden die Trennflächen geschliffen, geglättet und/oder auf ein gewünschtes Maß und/oder in eine gewünschte Form, z. B. Teleskopform, gebracht.

d) Die Lagenenden an den Trennflächen werden mit einer Tragwand in Kontakt gebracht und fügetechnisch mit dieser verbunden.

e) Die ggf. entstehenden Segmente werden, ggf. unter Verformung von Lagen und/oder Tragwand, zu einem Körper mit der ursprünglichen oder einer anderen Form zusammengesetzt.

20. Verfahren nach Anspruch 19, **gekennzeichnet durch** folgende Merkmale:

a) Der Rohling (30) weist einen abgeflachten Querschnitt auf.

b) Der Rohling (30) wird entsprechend der später gewünschten Form entlang einer beliebigen Schnittlinie (37a; 37b; 37c) in zwei Segmente (40) zerteilt.

c) Die Lagenenden an den Trennflächen werden, ggf. nach einer Bearbeitung, mit einer oder je mit einer Tragwand (44) in Kontakt gebracht und mit dieser verbunden, vorzugsweise durch Löten oder Schweißen.

d) Die Außenseiten der Tragwand (44) werden mit einer als Mantel dienenden Halbschale (43) fügetechnisch verbunden.

21. Verfahren nach Anspruch 19 oder 20, **gekennzeichnet durch** folgende Merkmale:

a) Der Rohling (30) wird vor dem Zerteilen mit einem in Halbschalen geteilten Mantel versehen und von zwei paßgenauen, kalibrierten Halbschalen umfaßt, wobei Halteklammern oder dergleichen auch die innerste Lage festhalten.

b) Der Rohling wird zerteilt, wobei die weitere Bearbeitung der Teile bis zur Verbindung von Tragwand (44) und Mantel (43) in den kalibrierten Halbschalen erfolgt.

22. Verfahren nach Anspruch 20 oder 21, **dadurch gekennzeichnet**, daß die entstandenen Segmente (40) mit Tragwänden (44) zu einem Körper zusammengesetzt und fügetechnisch verbunden werden, wobei auch Segmente unterschiedlich großer oder geformter Rohlinge, ggf. nach Umformung, zu neuen Formen zusammengesetzt werden können.

23. Verfahren nach Anspruch 19, **gekennzeichnet durch** folgende Merkmale:

a) Der Rohling wird einmal oder mehrfach etwa senkrecht zum Verlauf der Lagen (1, 2) aufgeschlitzt und ggf. teleskopiert.

b) Jeder Schlitz wird durch Einschieben einer V-förmig gefalteten Tragwand erweitert.

c) Die Tragwand wird festgeschweißt, beispielsweise durch Laserschweißen, oder angelötet, beispielsweise durch Einschieben eines heißen Dornes in die offene Seite der V-förmigen Tragwand, oder durch Formschluß befestigt

d) Der Schlitz wird vor oder bei dem Anbringen eines Mantelrohres geschlossen und die Tragwand mit diesem verbunden, wobei die beiden nunmehr aneinander liegenden Flächen der Tragwand ebenfalls miteinander verbunden werden können.

## Claims

1. Honeycomb body (20; 30; 40; 60; 90a, 90b; 130a, 130b; 150a, 150b; 170a, 170b; 190a, 190b, 190c, 190d; 210a, 210b), more particularly catalyst carrier body, which is layered or wound out of at least in part structured metal sheets (1, 2), is accommodated in a jacket (3; 23a, 23b, 23c; 43; 63; 93a, 93b; 133; 153a, 153b; 173a; 193; 203; 213a, 213b) and through which a fluid can flow, characterised in that partial sections of the jacket and/or one or several additional supporting walls (4; 24a, 24b, 24c; 44; 64a, 64b; 74a, 74b, 74c; 134; 154a, 154b; 174; 204; 214) which are arranged in the interior of the honeycomb body and are firmly connected with the jacket form the structure which supports the body and to which there are secured metal sheets (1, 2), which run in a curved or buckled manner and can be bent in the event of radial expansions of the supporting structure, on both sides, individually or joined one with the other to form composite bodies, leaving expansion joints (97; 197) between jacket parts and metal sheets or rather metal sheets or composite bodies.

2. Honeycomb body according to claim 1, characterised in that the supporting walls only extend over one portion of the axial length of the honeycomb body and/or in a radial direction only over one portion of the diameter.

3. Honeycomb body according to claim 1 or 2, characterised in that the body consists in a manner known per se of spirally wound, at least in part structured metal sheets (1, 2) which can be joined one with the other by joining techniques at least in partial regions to form a composite body, a supporting wall (4) establishing the single connection (5) in terms of joining techniques between jacket (3) and body.

4. Honeycomb body according to claim 1, 2 or 3, characterised in that the metal sheets (1, 2) are slit in the region of their contact points with the supporting structure substantially perpendicular to the through-flow direction.

5. Honeycomb body according to claim 1, 2, 3 or 4, characterised in that all the metal sheets (1, 2) run in a U-shaped, V-shaped or circle segment-shaped manner, if the case arises with legs of differing lengths, the ends of the metal sheets (1, 2) each being connected with the jacket or a supporting wall.

6. Honeycomb body according to one of the preceding claims, characterised in that the supporting wall (64a, 64b) or the supporting walls (74a, 74b, 74c) divides or divide the honeycomb body into two or more independent segments (78a, 78b, 78c).

7. Honeycomb body according to one of the preceding claims, characterised in that the supporting wall (44; 64a, 64b) or the supporting walls are connected (45a, 45b; 65a, 65b) with the jacket (43; 63) and stabilize it in respect of deformation.

8. Honeycomb body according to one of the preceding claims, characterised in that the layers (1, 2) are bent in a substantially U-shaped or V-shaped manner and their two ends are each secured to the same side of a supporting wall (44; 64a, 64b; 134; 154a, 154b; 214) or of a jacket section (93a, 93b; 193).

9. Honeycomb body according to one of the claims 1 to 7, characterised in that the layers (1, 2) are bent so that they are almost closed and their two ends (6a, 6b) are each secured on different sides of a supporting wall (4; 174; 204).

10. Honeycomb body according to one of the preceding claims, characterised in that at least a few of the layers (1, 2) run in a bent manner from a supporting wall (24a, 24b or 24c respectively) to another supporting wall (24b, 24c or 24a respectively) and are secured to the latter with their ends.

11. Honeycomb body according to one of the preceding claims, characterised in that the securement between layers (1, 2) and supporting wall (4; 24a, 24b, 24c; 44; 64a, 64b) is a brazed or welded connection and/or a mechanical form-closing connection (46; 86).

12. Honeycomb body according to claim 11, characterised in that the supporting wall (84) or the supporting walls has or have projections (86) and/or grooves which form form-closing connections with the layers (1, 2).

13. Honeycomb body according to claim 12, characterised in that the projections (86) and/or grooves run substantially perpendicular to the adjacent layers (1, 2).

14. Honeycomb body according to claim 11, 12 or 13, characterised in that each supporting wall (44) is provided with at least one welded seam (46), preferably laser welded seam, which incorporates the adjacent layers (1, 2) as well, in which case the welded seam (46) can have a root sag which simultaneously effects a further form-closing connection.

15. Honeycomb body according to one of the preceding claims, characterised in that the layers (1, 2) are brazed in addition on the face, in partial regions or altogether at their contact points one with the other.

16. Honeycomb body according to one of the preceding claims, characterised in that the supporting walls (64a, 64b) which lie in the interior of the catalyst carrier body are constructed in two layers, in which case they are connected by joining techniques, preferably welded, at least at the externally accessible sides (65a, 65b), completely or partly with each other.

17. Honeycomb body according to one of the preceding claims, characterised in that the honeycomb body (60; 90a, 90b; 130a, 130b; 150a, 150b; 210a, 210b) consists of two or several segments (90a, 90b; 130a, 130b; 150a, 150b; 210a, 210b), it being possible to produce the segments out of one or several different spiral-shaped, if the case arises, flattened winding(s) (30) by division (37a, 37b, 37c; 107) and the honeycomb body being produced by a different type of composition and, if the case arises, deformation of the segments.

18. Honeycomb body according to one of the preceding claims, characterised in that all or a part of the layers of all or of a part of the segments (130a, 130b) are displaced in respect of each other in a telescopic manner so that no plane faces, preferably conical ones are present.

19. Method for producing a honeycomb body, more particularly catalyst carrier body, according to claim 1, characterised by the following features:

a) A honeycomb-shaped blank, which is spirally wound, is produced in a manner known per se of layers of at least in part structured metal sheets, which blank has a circular or flattened cross section.

b) The blank is slit with a saw or another cutting device or the like or is divided into segments.

c) If necessary, the parting surfaces are ground, smoothed and/or brought to a desired measure and/or into a desired form, e.g. telescopic form.

d) The layer ends at the parting surfaces are brought into contact with a supporting wall and connected with the latter by joining techniques.

e) The segments which, if the case arises, develop, are combined, if the case arises with deformation of layers and/or supporting wall, to form a body with the original or another form.

20. Method according to claim 19, characterised by the following features:

a) The blank (30) has a flattened cross section.

b) The blank (30) is divided in accordance with the form required later along any line of intersection (37a; 37b; 37c) into two segments (40).

c) The layer ends at the parting surfaces are brought into contact, if the case arises after processing, with a or with a respective supporting wall (44) and connected with the latter, preferably through brazing or welding.

d) The outsides of the supporting wall (44) are connected by joining techniques with a half shell (43) serving as a jacket.

21. Method according to claim 19 or 20, characterised by the following features:

a) The blank (30) is provided before division with a jacket divided into half shells and is embraced by two calibrated half shells fitting exactly, holding clips or the like holding fast the innermost layer.

b) The blank is divided, further processing of the parts taking place until the connection of supporting wall (44) and jacket (43) in the calibrated half shells is established.

22. Method according to claim 20 or 21, characterised in that the resultant segments (40) are combined with supporting walls (44) to form a body and are connected by joining techniques, in which case even segments of differingly great or formed blanks can be combined, if the case arises after deformation, to give new forms.

23. Method according to claim 19, characterised by the following features:

a) The blank is slit once or several times substantially perpendicular to the course of the layers (1, 2) and, if the case arises, telescoped.

b) Each slit is widened through insertion of a supporting wall folded in a V-shaped manner.

c) The supporting wall is welded fast, for example through laser welding, or brazed thereon, for example, through insertion of a hot mandrel into the open side of the V-shaped supporting wall, or secured through form-closure.

d) The slit is closed before or in the case of provision of a jacket tube and the supporting wall is connected with the latter, in which case the two surfaces of the supporting wall which now rest against each other can likewise be connected with each other.

**Revendications**

1. Corps en forme de nid d'abeilles (20; 30; 40; 60; 90a, 90b; 130a, 130b; 150a, 150b; 170a, 170b; 190a, 190b, 190c, 190d; 210a, 210b), notamment support de catalyseur, constitué de tôles (1, 2) au moins partiellement structurées et empilées ou enroulées, logées dans une enveloppe (3; 23a, 23b, 23c; 43; 63; 93a, 93b; 133; 153a, 153b; 173a; 193; 203; 213a, 213b) et dans lequel peut passer un fluide, caractérisé en ce que des sections partielles de l'enveloppe et/ou une ou plusieurs parois porteuses (4; 24a, 24b, 24c; 44; 64a, 64b; 74a, 74b, 74c; 134; 154a, 154b; 174; 204; 214) supplémentaires, disposées à l'intérieur du corps en forme de nid d'abeilles, reliées rigidement à l'enveloppe et formant la structure portant le corps sont fixées, avec assemblage, des deux côtés, individuellement ou en formant entre elles des corps composites, à des tôles (1, 2), courbées ou coudées et susceptibles de fléchir dans le cas de dilatations radiales de la structure portante, en laissant des joints de dilatation (97; 197) entre les parties de l'enveloppe et les tôles ou entre les tôles ou les corps composites.

2. Corps en forme de nid d'abeilles suivant la revendication 1, caractérisé en ce que les parois porteuses ne s'étendent que sur une partie de la longueur axiale du corps en forme de nid d'abeilles et/ou en direction radiale que sur une partie du diamètre.

3. Corps en forme de nid d'abeilles suivant la revendication 1 ou 2, caractérisé en ce que le corps est constitué, d'une manière en soi connue, de tôles au moins partiellement structurées, enroulées en spirale, qui peuvent être assemblées entre elles par la technique d'assemblage, au moins dans des régions partielles, en un corps composite, une paroi porteuse (4) représentant la seule liaison (5) par la technique d'assemblage entre l'enveloppe (3) et le corps.

4. Corps en forme de nid d'abeilles suivant la revendication 1, 2 ou 3, caractérisé en ce que les tôles (1, 2) sont fendues sensiblement perpendiculairement au sens d'écoulement dans la région de leur point de contact avec la structure portante.

5. Corps en forme de nid d'abeilles suivant la revendication 1, 2, 3 ou 4, caractérisé en ce que toutes les tôles (1, 2) s'étendent en forme de U, en forme de V ou en forme de segment de cercle, le cas échéant avec des branches de longueur différente, les extrémités des tôles (1, 2) étant reliées respectivement à l'enveloppe ou à une paroi porteuse.

6. Corps en forme de nid d'abeilles suivant l'une des revendications précédentes, caractérisé en ce que la paroi porteuse (64a, 64b) ou les parois porteuses (74a, 74b, 74c) divisent le corps en forme de nid d'abeilles en deux ou en plusieurs segments indépendants (78a, 78b, 78c).

7. Corps en forme de nid d'abeilles suivant l'une des revendications précédentes, caractérisé en ce que la paroi porteuse (44; 64a, 64b) ou les parois porteuses sont reliées (45a, 45b; 65a, 65b) à l'enveloppe (43; 63) et la stabilisent vis-à-vis de toute déformation.

8. Corps en forme de nid d'abeilles suivant l'une des revendications précédentes, caractérisé en ce que les couches (1, 2) sont coudées en forme de U ou en forme de V, et leurs deux extrémités sont fixées au même côté d'une paroi porteuse (44; 64a, 64b; 134; 154a, 154b; 214) ou d'une section d'enveloppe (93a, 93b; 193).

9. Corps en forme de nid d'abeilles suivant l'une des revendications 1 à 7, caractérisé en ce que les couches (1, 2) sont courbées en étant presque fermées et leurs deux extrémités (6a, 6b) sont fixées respectivement à des côtés différents d'une paroi porteuse (4; 174; 204).

10. Corps en forme de nid d'abeilles suivant l'une des revendications précédentes, caractérisé en ce qu'au moins certaines des couches (1, 2) s'étendent, en étant courbées, d'une paroi porteuse (24a, 24b et 24c) à une autre paroi porteuse (24b, 24c et 24a) et sont fixées à celle-ci par leurs extrémités.

11. Corps en forme de nid d'abeilles suivant l'une des revendications précédentes, caractérisé en ce que la fixation entre les couches (1, 2) et la paroi porteuse (4; 24a, 24b, 24c; 44; 64a, 64b) est un joint brasé ou un joint soudé et/ou un joint mécanique par complémentarité de formes (46; 86).

12. Corps en forme de nid d'abeilles suivant la revendication 11, caractérisé en ce que la paroi porteuse (84) ou les parois porteuses comportent des parties saillantes (86) et/ou des gorges qui forment les liaisons par complémentarité de formes avec les couches (1, 2).

13. Corps en forme de nid d'abeilles suivant la revendication 12, caractérisé en ce que les parties saillantes (86) et/ou les gorges s'étendent à peu près perpendiculairement aux couches voisines (1, 2).

14. Corps en forme de nid d'abeilles suivant la revendication 11, 12 ou 13, caractérisé en ce que chaque paroi porteuse (44) est munie d'au moins un cordon de soudure (46), de préférence un cordon de soudure laser, qui inclut les couches voisines (1, 2), le cordon de soudure (46) pouvant comporter une racine qui donne en même temps une liaison par complémentarité de formes.

15. Corps en forme de nid d'abeilles suivant l'une des revendications précédentes, caractérisé en ce que les couches (1, 2) sont soudées, en outre, les unes aux autres du côté frontal dans les régions partielles ou dans leur ensemble, en leurs points de contact.

16. Corps en forme de nid d'abeilles suivant l'une des revendications précédentes, caractérisé en ce que les parois porteuses (64a, 64b) se trouvant à l'intérieur du support de catalyseur, sont à double couche en étant reliées entre elles par la technique d'assemblage, de préférence soudées, en tout ou partie au moins sur les côtés extérieurs accessibles (65a, 65b).

17. Corps en forme de nid d'abeilles suivant l'une des revendications précédentes, caractérisé en ce que le corps en forme de nid d'abeille (60; 90a, 90b; 130a, 130b; 150a, 150b; 210a, 210b) est constitué de deux ou de plusieurs segments (90a, 90b; 130a, 130b; 150a, 150b; 210a, 210b), les segments pouvant être fabriqués par division (37a, 37b, 37c; 107) à partir d'un ou de plusieurs enroulements (30) différents, en forme de spirale, éventuellement aplatis et le corps en forme de nid d'abeilles étant fabriqué en recomposant d'une autre façon les segments et, le cas échéant, en les déformant.

18. Corps en forme de nid d'abeilles suivant l'une des revendications précédentes, caractérisé en ce que toutes les couches ou une partie des couches de tous les segments ou d'une partie des segments (130a, 130b) sont décalées mutuellement télescopiquement de manière à ménager des côtés frontaux qui ne sont pas plans, mais qui sont de préférence coniques.

19. Procédé de fabrication d'un corps en forme de nid d'abeilles, notamment d'un support de catalyseur suivant la revendication 1, remarquable par les caractéristiques suivantes:

a) on fabrique, d'une manière en soi connue, une ébauche enroulée en spirale en forme de nid d'abeilles, à partir de couches de tôles au moins partiellement structurées, qui ont une section transversale circulaire ou aplatie,

b) on fend l'ébauche à l'aide d'une scie ou à l'aide d'un autre outil coupant ou d'un outil analogue, ou on la divise en segments,

c) si nécessaire, on meule les surfaces de séparation, on les rend lisses et/ou on les met à une dimension souhaitée et/ou à une forme souhaitée, par exemple sous une forme télescopique,

d) on met les extrémités des couches sur ces surfaces de séparation en contact avec une paroi porteuse et on les relie à celles-ci par la technique d'assemblage,

e) on recompose les segments éventuellement formés, éventuellement avec déformation des couches et/ou de la paroi porteuse, en un corps ayant la forme initiale ou une autre forme.

20. Procédé suivant la revendication 9, remarquable par les caractéristiques suivantes:

a) l'ébauche (30) comporte une section transversale aplatie,

b) l'ébauche (30) est divisée conformément à la forme ultérieure souhaitée, le long d'une ligne de coupe appropriée (37a, 37b, 37c) en deux segments (40),

c) les extrémités des couches sont, sur les surfaces, de séparation, le cas échéant après un usinage, mises en contact avec une ou respectivement avec une paroi porteuse (44) et sont reliées à celle-ci de préférence par brasage, par soudage,

d) les côtés extérieurs de la paroi porteuse (44) sont reliés par la technique d'assemblage à une hémicoquille (43) servant d'enveloppe.

21. Procédé suivant la revendication 19 ou 20, remarquable par les caractéristiques suivantes:

a) l'ébauche (30) est munie, avant d'être divisée, d'une enveloppe divisée en hémi-coquilles et comporte deux hémi-coquilles calibrées et ajustées de manière précisée, des étriers de retenue ou des organes analogues maintenant aussi la couche la plus à l'intérieur,

b) l'ébauche est divisée, le post-traitement des parties s'effectuant jusqu'à la liaison de la paroi porteuse (44) et de l'enveloppe (43) dans les hémicoquilles calibrées.

22. Procédé suivant la revendication 20 ou 21, caractérisé en ce que les segments (40) formés sont assemblés avec des parois porteuses (44) en un corps et sont reliés par la technique d'assemblage, des segments d'ébauches de dimensions ou de formes différentes, le cas échéant après déformation, pouvant être assemblés en de nouvelles formes.

23. Procédé suivant la revendication 19, remarquable par les caractéristiques suivantes:

a) l'ébauche est fendue une fois ou plusieurs fois à peu près perpendiculairement à l'étendue des couches (1, 2) et, le cas échéant, est montée télescopiquement,

b) chaque fente est élargie par introduction d'une paroi porteuse pliée en forme de V,

c) la paroi porteuse est soudée, par exemple par soudage par laser, ou est brasée, par exemple par introduction d'un mandrin chaud dans le côté ouvert de la paroi porteuse en forme de V, ou est fixée par complémentarité de formes,

d) la fente est fermée avant ou lors du montage d'un tube-enveloppe et la paroi porteuse est reliée à celui-ci, les deux surfaces de la paroi porteuse, qui sont maintenant l'une contre l'autre, pouvant être également reliées l'une à l'autre.

FIG1

FIG2

FIG 3

FIG 4

FIG 5

FIG 6

FIG 7

FIG 8

FIG 9

FIG 10

FIG 11

FIG 12

EP 0 245 738 B1

FIG 13

FIG 14

FIG 15

FIG 16

FIG 17

190d

190a

191

187

190c

190b

FIG 18

190d

197

193

190a

190c

190b

FIG 19

FIG 20

FIG 21